# FASCICULE DE BREVET EUROPEEN

(11) **EP 2 043 331 B1**
(45) Date de publication et mention de la délivrance du brevet: **23.01.2019**
(21) Numéro de dépôt: 08104505.6
(22) Date de dépôt: 23.06.2008
(51) Int. Cl.: H04L 29/08, H04L 29/06

(54) **Dispositif de restitution de séquences vidéo et procédé de configuration de ce dispositif**
Wiedergabevorrichtung für Videosequenzen und Konfigurationsverfahren dieser Vorrichtung
Device for restoring video sequences and method of configuring this device

(30) Priorité: 27.06.2007 FR 0756056
(43) Date de publication de la demande: 01.04.2009
(73) Titulaire: SAGEMCOM BROADBAND SAS, 92500 Rueil-Malmaison (FR)
(72) Inventeur: Cuoq, Jean-Noel, 92150, Suresnes (FR)
(74) Mandataire: Lebkiri, Alexandre

(56) Documents cités:
- WO-A-2006/131898
- US-A1- 2007 061 844

## Description

### DOMAINE TECHNIQUE DE L'INVENTION

La présente invention concerne un dispositif de restitution de séquences vidéo et un procédé de configuration de ce dispositif. L'invention s'applique plus particulièrement au domaine des dispositifs reliés à un réseau de transmission de données et connectés à une télévision tels que des décodeurs ou des lecteurs multimédias. On entend par dispositif de restitution de séquences vidéo un dispositif dont la fonction principale est de fournir des séquences vidéo. La présente invention ne couvre donc pas le domaine de la téléphonie mobile.

D'une façon générale, il existe de plus en plus de dispositifs de restitution de séquences vidéo du type précité destinés à plusieurs marchés ; en d'autres termes, le fabricant (ou l'opérateur) dispose d'un stock de dispositifs génériques qui peuvent être identiques et qui sont ensuite dispatchés dans des pays ou territoires différents.

Dès lors, ces dispositifs génériques doivent être personnalisés en fonction du pays de destination afin de répondre à des variantes d'utilisation différentes selon les pays. Chaque dispositif est équipé d'un système de fichiers (« filesystem » en anglais) sur lequel est mémorisé en usine de fabrication un pays par défaut auquel correspond une langue d'affichage par défaut (en règle générale, l'anglais). On parlera par la suite de valeur de pays inscrite dans le « filesystem ».

### ARRIERE PLAN TECHNOLOGIQUE DE L'INVENTION

Une solution pour répondre à ce besoin de personnalisation consiste à établir une connexion entre le dispositif et un serveur du type plateforme de services via un réseau du type IP (Internet Protocol) sur Ethernet. Dans le cas d'un décodeur de télévision par exemple, la connexion avec le serveur peut être réalisée via un modem ADSL du type « triple play » (offre mêlant de la télévision sur ADSL, de la téléphonie et un accès à Internet) ou via une technologie de transport par fibre optique du type FTTH (« Fiber To The Home » en anglais). Lorsque la connexion est réalisée, le serveur récupère des informations concernant le dispositif. Dans le cas d'un décodeur par exemple, ces informations peuvent être du type numéro de série, numéro de carte à puce ou type de décodeur. Si le décodeur est reconnu comme étant valide par la plateforme de services, cette dernière vérifie la valeur de territoire inscrite dans le « filesystem ». Si cette valeur est la valeur par défaut (ou dans certains cas si cette valeur n'est pas autorisée dans le pays), le serveur met à jour la valeur du pays en indiquant le pays détecté dans lequel se trouve effectivement le dispositif. Cette valeur de pays est stockée dans le dispositif au travers de données locales et persistantes (i.e. des données stockées non volatiles localement sur le dispositif) appelées « paramètres de personnalisation ». Ces paramètres de personnalisation vont notamment permettre d'adapter la langue du menu d'affichage, l'interface homme machine, les caractéristiques spécifiques de l'interface avec l'opérateur (« look and feel » en anglais) ou les options et services spécifiques au pays détecté (par exemple une chaîne de télévision autorisée dans un pays et pas dans un autre). Cette adaptation en fonction des paramètres de personnalisation permanents est dynamique : une application locale ou distante (téléchargée) va régulièrement lire les paramètres de personnalisation et adapte son comportement en fonction de la valeur.

Toutefois, la mise en oeuvre d'une telle solution de personnalisation pose certaines difficultés.

Ainsi, l'inconvénient majeur de cette solution réside dans la difficulté à établir la connexion du dispositif avec la plateforme via le réseau. La connexion peut échouer pour des raisons diverses : non reconnaissance du dispositif par le modem, problème de connectique (câble Ethernet mal branché par exemple), modem inactif, problème lié au PLT (« Powerline Tele-communication » en anglais, i.e. technologie qui vise à faire passer de l'information sur des lignes électriques en utilisant des techniques de modulation avancées), difficulté à établir la connexion en Wi-Fi...

Dès lors, le dispositif mis sous tension ne parvenant pas à se connecter au réseau, les messages d'erreur et de guidage permettant à l'utilisateur d'établir une connexion sont rédigés en langue anglaise qui constitue la langue par défaut fixée en usine.

Cet affichage dans une langue qui peut ne pas être celle de l'utilisateur peut désorienter ce dernier qui n'est alors pas en mesure de comprendre des messages techniques parfois complexes.

En outre, dans le cas d'un décodeur compatible haute définition (HD) et destiné à être relié à une télévision haute définition (TVHD), il faut configurer les deux équipements (télévision et décodeur) pour que ces derniers puissent correctement communiquer entre eux (les équipements fonctionnant en haute définition ne dialoguent pas immédiatement ensemble). Cette configuration peut se faire via l'affichage de messages sur l'écran de la télévision. Dans la mesure où le décodeur n'est pas parvenu à se connecter au réseau, l'ensemble des messages d'installation seront donc également en anglais. Tant que l'installation n'est pas réalisée correctement par l'utilisateur (par exemple parce que ce dernier ne comprend pas l'anglais), l'utilisation de la TVHD est impossible.

Le document US2007/061844 décrit par ailleurs une télévision équipée d'un « tuner », qui traite des signaux d'ondes hertziennes pour restituer des séquences vidéo encodées, et d'un modem ADSL reliant la télévision à un serveur distant par le réseau internet.

### DESCRIPTION GENERALE DE L'INVENTION

Dans ce contexte, la présente invention vise à fournir un dispositif de restitution de séquences vidéo permettant de s'affranchir des problèmes précités en offrant à l'utilisateur un mécanisme de configuration plus efficace.

A cette fin, l'invention propose un dispositif de restitution de séquences vidéo comportant :
- des moyens de personnalisation du dispositif en fonction de paramètres de personnalisation dépendant d'un territoire,
- des moyens de connexion à un serveur distant, ledit serveur distant transmettant au dispositif une information sur le territoire dans lequel est localisé le dispositif en cas de succès de la connexion,
le dispositif étant **caractérisé en ce qu'il** comporte en outre des moyens pour commuter sur un mode de configuration locale en cas d'échec de la connexion au serveur distant, ledit mode de configuration locale permettant à l'utilisateur de sélectionner un territoire.

L'invention propose également :
- un procédé de configuration d'un dispositif de restitution de séquences vidéo ;
- un produit programme d'ordinateur comprenant des instructions pour mettre en oeuvre le procédé de configuration, lorsqu'il est exécuté par un ordinateur ; et
- un support d'enregistrement lisible par ordinateur, sur lequel est enregistré le produit programme d'ordinateur.

Grâce à l'invention, si la connexion au serveur de personnalisation échoue, un mode dégradé de configuration locale est mis en oeuvre qui permet à l'utilisateur de choisir le territoire (et donc la langue d'affichage) associé à une personnalisation du dispositif.

Ce mécanisme de personnalisation est atteint en combinant un traitement déporté sur un serveur distant et un traitement local.

Le dispositif selon l'invention peut également présenter une ou plusieurs des caractéristiques ci-dessous, considérées individuellement ou selon toutes les combinaisons techniquement possibles.

Avantageusement, le dispositif selon l'invention comporte :
- des moyens pour transmettre à l'utilisateur un message le guidant pour rétablir la connexion au serveur distant, ledit message étant rédigé dans la langue dudit territoire sélectionné par l'utilisateur,
- des moyens pour remplacer ledit territoire sélectionné par l'utilisateur par le territoire détecté par le serveur en cas de succès de la connexion.

Avantageusement, les moyens pour remplacer le territoire sélectionné sont commandés par le serveur distant qui peut disposer d'une pluralité de critères pour réaliser ou non le remplacement.

Avantageusement, les moyens pour commuter sur un mode de configuration locale commutent au bout d'un temps prédéterminé d'échec de la connexion au serveur. Ce temps prédéterminé est de préférence inférieur à 3 minutes, préférentiellement compris entre 1 minute et 1,5 minute. Les moyens pour commuter peuvent également commuter au bout d'un nombre prédéterminé de tentatives de connexion avortées.

Avantageusement, les moyens de connexion à un serveur distant sont tels qu'ils continuent à essayer d'établir une connexion au serveur distant lorsque ledit dispositif est en mode de configuration locale.

Le dispositif selon l'invention est particulièrement adapté au domaine des décodeurs de télévision.

La présente invention a également pour objet un procédé de configuration d'un dispositif de restitution de séquences vidéo selon l'invention, lesdites séquences vidéo étant affichées sur un écran tel qu'un écran de télévision, ledit procédé étant caractérisé en ce qu'il comporte les étapes suivantes :
- à la mise sous tension du dispositif, tentative de connexion au serveur distant ;
- en cas d'échec de la connexion au serveur distant:
   ∘ commutation en mode de configuration locale ;
   ∘ si le territoire courant est le territoire par défaut :
      ▪ affichage d'un choix de territoires sur l'écran ;
      ▪ sélection d'un territoire par l'utilisateur et remplacement du territoire par défaut par le territoire sélectionné;
      ▪ affichage sur l'écran d'un message guidant l'utilisateur pour rétablir la connexion au serveur distant et/ou d'un message guidant l'utilisateur pour configurer la connexion entre le dispositif selon l'invention et l'écran, en particulier dans le cas d'un écran haute définition, le(s) message(s) étant rédigé(s) dans la langue du territoire sélectionné par l'utilisateur ;
   ∘ si le territoire courant est un territoire déjà sélectionné par l'utilisateur ou si le territoire courant est un territoire déjà configuré par le serveur lors d'une précédente connexion réussie:
      ▪ affichage sur l'écran d'un message guidant l'utilisateur pour rétablir la connexion au serveur distant et/ou d'un message guidant l'utilisateur pour configurer la connexion entre le dispositif selon l'invention et l'écran, en particulier dans le cas d'un écran haute définition, le(s) message(s) étant rédigé(s) dans la langue du territoire déjà sélectionné par l'utilisateur ou dans la langue déjà configurée par le serveur;
- en cas de succès de la connexion au serveur distant :
   ∘ détection par le serveur du territoire effectif dans lequel est localisé le dispositif selon l'invention ;
   ∘ si le territoire courant est le territoire par défaut, remplacement du territoire par défaut par le territoire effectif;
   ∘ si le territoire courant est un territoire sélectionné par l'utilisateur en mode de configuration locale:
      ▪ comparaison du territoire sélectionné par l'utilisateur avec le territoire effectif ;
      ▪ remplacement ou non du territoire sélectionné par le territoire effectif en fonction de règles de fonctionnement propres au serveur.

Avantageusement, l'étape d'affichage d'un choix de territoires sur l'écran est réalisée via l'affichage d'une pluralité de drapeaux, chacun des drapeaux étant associé à un territoire donné. On peut également envisager d'afficher à coté de chacun des drapeaux la langue dans sa traduction d'origine (ex: Français, English, Deutch, Cesky...).

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée d'une architecture utilisant un dispositif selon l'invention ;
- la figure 2 est une représentation sous forme d'un logigramme illustrant les étapes du procédé selon l'invention;

### DESCRIPTION DETAILLEE DES FORMES DE REALISATION PREFE-REES DE L'INVENTION

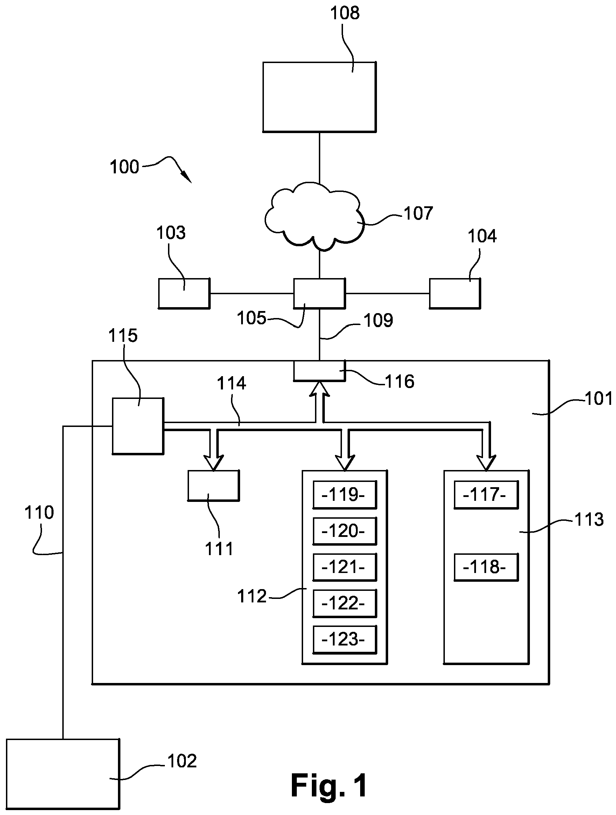

La figure 1 représente une architecture 100 utilisant un dispositif 101 selon l'invention. Dans l'exemple illustré, le dispositif 101 est un décodeur de télévision numérique.

L'architecture 100 comporte en outre :
- un téléviseur 102, un téléphone 103 et un micro-ordinateur 104,
- un modem 105,
- un réseau 107 du type Internet,
- un serveur distant 108 tel qu'une plateforme de services d'un opérateur de télécommunication.

Le modem 105 est un modem du type ADSL « triple play » offrant à l'utilisateur l'accès aux trois services que sont la télévision via la télévision 102, la téléphonie via le téléphone 103 et Internet via le micro-ordinateur 104.

L'accès aux chaines de télévision nécessite l'utilisation du décodeur 101 dont la fonction primaire est de décoder un flux de données vidéo compressées (par exemple au format MPEG-2 ou MPEG-4 (H264)) afin de réduire le débit nécessaire à la transmission de ce flux. Le décodeur 101 comporte des moyens de connexion au réseau 107 via un récepteur de données numériques 116. Le récepteur de données numériques 116 et le modem 105 sont reliés par un câble Ethernet 109. On notera que cette liaison pourrait également être une liaison WiFi ou PLT (« Power Line Transmission » en anglais ou CPL « Courant Porteur en Ligne »).

Le décodeur 101 comporte :
- un microprocesseur 111 commandé par des programmes situés dans une mémoire de programme 112,
- une mémoire 113 de données,
- un bus 114 d'adresses, de données et de commandes permettant aux différents éléments du décodeur 101 d'être reliés entre eux et permettant aussi au microprocesseur 111 de pouvoir communiquer avec ces éléments afin de les gérer,
- un décodeur de données du type MPEG 2 115,

On notera que le décodeur peut également comprendre une puce unique (Chipset) regroupant un microprocesseur, un décodeur MPEG-2/H264 et un encodeur PAL/SECAM.

Le décodeur 101 reçoit via le récepteur 116 un flux de données vidéo compressées qui sont transmises au décodeur 115 pour être restituées au téléviseur 102 via une prise péritel 110.

La mémoire de données 113 est notamment destinée à mémoriser différentes informations, valeurs ou paramètres nécessaires au fonctionnement du décodeur. On considérera par la suite que le « filesystem » est incorporé dans cette mémoire de données 113. La mémoire de données 113 comporte ainsi des données locales et persistantes 117 appelées « paramètres de personnalisation » du décodeur 101.

Les « paramètres de personnalisation » 117 dépendent de la valeur du pays dans lequel est localisé le décodeur 101. En d'autres termes, un jeu de « paramètres de personnalisation » est associé à un pays. De façon plus générale, on peut également parler de territoire plutôt que de pays puisqu'on peut concevoir des personnalisations différentes au sein d'un même pays regroupant plusieurs territoires. On définit donc un territoire comme est une étendue géographique délimitée à laquelle on associe un jeu de « paramètres de personnalisation ».

Une valeur de pays par défaut 118 est enregistrée dans la mémoire de données 113. Cette valeur 118 est fixée en usine avec notamment une langue d'affichage qui est celle du pays par défaut (en règle générale, l'anglais).

La mémoire de programmes 112 est notamment destinée à la gestion des différentes opérations à exécuter pour mettre en oeuvre différentes fonctionnalités du décodeur 101. Elle comporte plusieurs moyens logiciels (i.e. applications) dont certains sont dédiés à la mise en oeuvre de l'invention. Dans d'autres exemples de réalisation du décodeur 101, ces moyens logiciels pourraient être remplacés par des circuits électroniques spécifiques.

Ainsi, la mémoire de programmes 112 comporte des moyens de personnalisation 119 du décodeur 101 en fonction des paramètres de personnalisation.

On notera que la séparation entre la notion de mémoire de programmes et la notion de mémoire de données est donnée ici à titre illustratif ; cette séparation n'est souvent pas aussi marquée; ainsi, une mémoire persistante (Flash, E2PROM, disque dur...) peut incorporer à la fois le « filesystem » et des programmes.

En fonction des paramètres de personnalisation, et donc du pays, les moyens de personnalisation 119 permettent d'adapter différents éléments tels que les langues des menus d'affichage sur l'écran du téléviseur 102, les caractéristiques spécifiques de l'interface avec l'opérateur avec lequel l'utilisateur a souscrit un abonnement (« look and feel » en anglais) ou les options et services spécifiques au pays (par exemple une chaîne de télévision autorisée dans un pays et pas dans un autre).

La mémoire de programmes 112 comporte en outre :
- des moyens 120 pour commuter sur un mode de configuration locale en cas d'échec de la connexion au serveur 108, ce mode de configuration locale permettant à l'utilisateur de sélectionner le pays de son choix,
- des moyens 121 pour transmettre à l'utilisateur un message le guidant pour rétablir la connexion au serveur 108,
- des moyens 122 pour remplacer un pays sélectionné par l'utilisateur ou le pays par défaut par un pays effectivement détecté par le serveur 108 en cas de succès de la connexion.
- des moyens 123 pour remplacer le pays par défaut par un pays sélectionné par l'utilisateur.

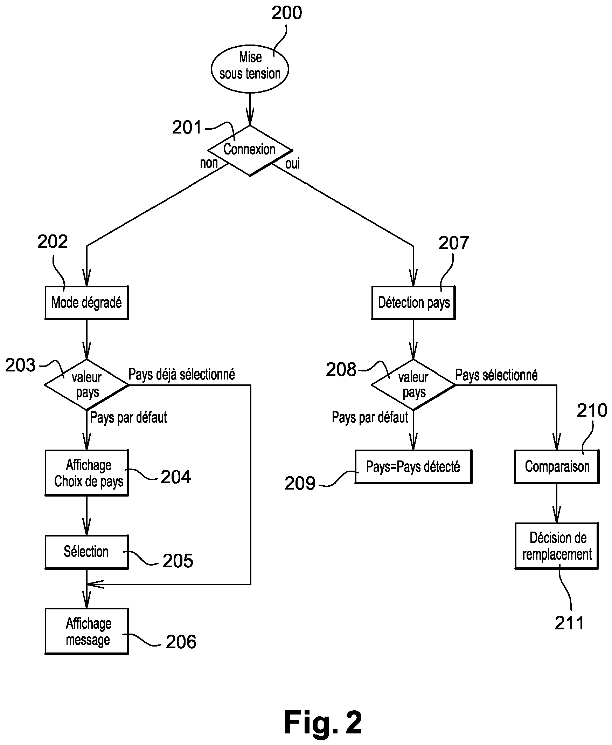

Les moyens ci-dessus seront décrits plus en détails en référence à la figure 2 qui montre une représentation sous forme de logigramme illustrant les principales étapes du procédé selon l'invention.

A la mise sous tension du décodeur 101 correspondant à une étape 200 (ou en sortie de veille du décodeur 101), le décodeur 101 essaye de se connecter au serveur 108 selon une étape 201.

En cas d'échec de la connexion entre le décodeur 101 et le serveur 108 (par exemple à cause d'une non reconnaissance du décodeur 101 par le modem 105, d'un problème de connectique tel que le câble Ethernet 109 mal branché, d'un problème de fonctionnement du modem 105, d'un problème lié au courants porteurs PLT ou d'une difficulté à établir la connexion en Wi-Fi), le décodeur 101 commute sur un mode de configuration locale (via les moyens 120 de commutation), dit mode dégradé par la suite, selon une étape 202.

On notera que cette étape 202 peut se faire au bout d'un temps prédéterminé d'échec de la connexion au serveur 108. Ce temps prédéterminé est de préférence inférieur à 3 minutes, préférentiellement compris entre 1 minute et 1,5 minute.

Selon une étape 203, le décodeur 101 vérifie si la valeur du pays est la valeur par défaut ou une valeur de pays différente de la valeur par défaut.

Si la valeur de pays est la valeur par défaut, dans une étape 204, une interface de sélection de pays s'affiche avantageusement sur l'écran du téléviseur 102. Cette interface peut être la plus conviviale possible en proposant par exemple à l'utilisateur une série de drapeaux auxquels on associe une langue du pays correspondant.

Selon une étape 205, l'utilisateur sélectionne le pays de son choix et la valeur du pays devient la valeur du pays sélectionné (via les moyens 123 du décodeur 101 qui permettent ce remplacement).

Selon une étape 206, les moyens 121 permettent avantageusement l'affichage sur l'écran du téléviseur 102 de messages dans la langue du pays sélectionné par l'utilisateur et guidant ce dernier afin de rétablir la connexion avec le serveur 108. Dans le cas d'un décodeur 101 compatible HD et d'une télévision 102 TVHD, il faut configurer les deux équipements pour que ces derniers puissent correctement communiquer entre eux. Selon l'invention, l'ensemble des messages d'installation seront donc également dans la langue du pays sélectionné par l'utilisateur.

De manière préférentielle, si la valeur de pays est égale à la valeur d'un pays déjà sélectionné par l'utilisateur (ou si la valeur du pays est égale à la valeur d'un pays déjà configuré par le serveur lors d'une précédente connexion réussie), le procédé selon l'invention passe directement à l'étape 206 d'affichage.

En cas de succès de la connexion, le décodeur 101 envoie une requête selon le protocole DHCP (« Dynamic Host Configuration Protocol » en anglais) qui permet à un équipement client qui se connecte sur le réseau d'obtenir d'un serveur son adresse IP ainsi que l'adresse URL correspondant à la page d'accueil du site web hébergé par le serveur. On notera que cette requête DHCP est lancée régulièrement par le décodeur 101 (environ toutes les 3 minutes). Le décodeur 101 lance alors une requête http (« hypertext transfer protocol » en anglais) pour se connecter sur la page d'accueil du serveur 108 du fournisseur ; une page html (« Hypertext Markup Language » en anglais) est chargée sur le décodeur 101.

Le serveur 108 va alors récupérer des informations sur le décodeur 101 telles que son numéro de série, le numéro de la carte à puce associée au décodeur, le type de décodeur ainsi que le pays dans lequel se trouve le décodeur selon une étape 207.

Le serveur 108 envoie une commande du type SNMP (pour Simple Network Management Protocol en langue anglaise) vers le décodeur 101. Le protocole SNMP est un protocole d'administration distante, par exemple sur des réseaux de type Internet. Le protocole SNMP est utilisé pour transmettre des informations entre un équipement et un serveur d'administration. Le décodeur 101 interprète la commande du type SNMP pour éventuellement mettre à jour la valeur du pays. On notera que d'autres protocoles tels que le protocole TR-069 (protocole de gestion qui permet la configuration, l'activation et le contrôle des équipements à partir du réseau) peuvent être utilisés à la place du protocole SNMP. On peut également utiliser une solution consistant à stocker une page html locale au décodeur qui appelle une Interface de programmation (API pour « Application Programming Interface » en anglais) du type JavaScript qui va mettre à jour la valeur du pays. L'invention s'applique bien entendu tout autant à une page html téléchargée qu'à une page html locale.

Selon une étape 208, si la valeur courante du pays est la valeur du pays par défaut 118, la valeur du pays par défaut est remplacée via les moyens de remplacement 122 par la valeur du pays détecté par le serveur 108 (étape 209). Les paramètres de personnalisation 117 sont adaptés en conséquence.

Si la valeur courante du pays est une valeur de pays qui a été sélectionnée auparavant par l'utilisateur en mode dégradé, le serveur 108 compare la valeur sélectionnée avec la valeur réelle (étape 210) et peut décider de forcer ou non la valeur du pays à la valeur détectée selon des critères prédéfinis (étape 211): par exemple, si les services et options sont identiques entre le pays sélectionné et le pays détecté, le serveur 108 peut décider de ne rien faire. Inversement, si les services et options sont différents, il commandera les moyens de remplacement 122 de sorte que les paramètres de personnalisation 117 soient adaptés au pays détecté. En l'absence de règles prédéfinies, il peut être décidé soit de forcer systématiquement la valeur du pays à la valeur détectée soit au contraire de laisser la valeur du pays sélectionné par l'utilisateur.

On notera que lorsque le décodeur 101 selon l'invention est en mode dégradé, il peut continuer à chercher à établir une connexion avec le serveur 108.

Bien entendu, l'invention n'est pas limitée au mode de réalisation qui vient d'être décrit.

Notamment, le mode de réalisation décrit fait référence à un modem ADSL externe au décodeur. L'invention s'applique tout aussi bien à un décodeur incluant un modem interne permettant par exemple une connexion au réseau via un réseau de téléphonie fixe RTC (Réseau Téléphonique Commuté).

De même, dans une variante, le décodeur peut comporter un récepteur de données vidéo provenant d'un réseau câblé ou d'une liaison satellite.

En outre, dans l'exemple illustré, le dispositif est un décodeur de télévision numérique. Il convient cependant de noter que les différents éléments du dispositif selon l'invention peuvent être disposés dans tout autre type de dispositif de restitution de séquences vidéo tel qu'un lecteur multimédia (DVD par exemple) ou même directement dans un module de télévision numérique.

Par ailleurs, dans l'exemple illustré, les données de personnalisation sont stockées dans un système de fichier ou File System. On notera cependant que ces données peuvent également être stocké de manière brute dans un autre type de mémoire non volatile (du type mémoire Flash, E2PROM ou disque dur par exemple). L'invention s'applique donc même en l'absence de structure de File System dans le dispositif.

Enfin, on pourra remplacer tout moyen par un moyen équivalent

## Revendications

1. Dispositif (101) de restitution de séquences vidéo comportant :
- une mémoire de données (113) dans laquelle sont enregistrés une valeur courante de territoire (118) et des paramètres de personnalisation (117) dépendant de la valeur courante de territoire ;
- des moyens (116) de connexion à un serveur distant (108), ledit serveur distant (108) permettant, en cas de succès de la connexion, de détecter le territoire dans lequel est localisé ledit dispositif (101) et de transmettre audit dispositif (101) une information sur le territoire détecté afin qu'il remplace la valeur courante de territoire (118) par la valeur du territoire détecté ;
- des moyens (119) de personnalisation dudit dispositif en fonction des paramètres de personnalisation ;
ledit dispositif (101) étant **caractérisé en ce qu'**il comporte en outre des moyens (120) pour commuter sur un mode de configuration locale en cas d'échec de la connexion au serveur distant (108), ledit mode de configuration locale permettant à l'utilisateur de sélectionner un territoire de son choix et de remplacer la valeur courante de territoire (118) par la valeur du territoire sélectionné.

2. Dispositif (101) selon la revendication 1 **caractérisé en ce qu'**il comporte des moyens (121) pour transmettre à l'utilisateur un message le guidant pour rétablir la connexion au serveur distant (108), ledit message étant transmis dans la langue dudit territoire sélectionné par l'utilisateur.

3. Dispositif (101) selon l'une des revendications précédentes **caractérisé en ce qu'**il comporte des moyens (122) pour remplacer ledit territoire sélectionné par l'utilisateur par le territoire détecté par le serveur (108) en cas de succès de la connexion.

4. Dispositif (101) selon la revendication précédente **caractérisé en ce que** lesdits moyens (122) pour remplacer ledit territoire sélectionné sont commandés par le serveur (108) distant qui dispose d'une pluralité de critères pour réaliser ou non le remplacement.

5. Dispositif (101) selon l'une des revendications précédentes **caractérisé en ce que** lesdits moyens (120) pour commuter sur un mode de configuration locale commutent au bout d'un temps prédéterminé d'échec de la connexion au serveur et/ou d'un nombre prédéterminé de tentatives de connexion avortées.

6. Dispositif (101) selon l'une des revendications précédentes **caractérisé en ce que** les moyens (116) de connexion à un serveur distant (108) sont tels qu'ils continuent à essayer d'établir une connexion au serveur distant (108) lorsque ledit dispositif (101) est en mode de configuration locale.

7. Dispositif (101) selon l'une des revendications précédentes **caractérisé en ce que** ledit dispositif est un décodeur de télévision.

8. Dispositif (101) selon l'une des revendications précédentes **caractérisé en ce que** les moyens (119) de personnalisation et les moyens (120) pour commuter sur le mode de configuration locale sont des moyens logiciels situés dans une mémoire de programme (112) dudit dispositif (101).

9. Procédé de configuration d'un dispositif (101) de restitution de séquences vidéo selon la revendication 1, lesdites séquences vidéo étant affichées sur un écran tel qu'un écran de télévision (102), ledit procédé étant **caractérisé en ce qu'**il comporte les étapes suivantes :
- à la mise sous tension dudit dispositif (200), tentative de connexion au serveur distant (201);
- en cas d'échec de la connexion au serveur distant (201):
∘ commutation en mode de configuration locale (202);
∘ si le territoire courant est le territoire par défaut (203):
▪ affichage d'un choix de territoires sur ledit écran (204);
▪ sélection d'un territoire par l'utilisateur et remplacement du territoire par défaut par le territoire sélectionné (205);
▪ affichage sur ledit écran d'un message guidant l'utilisateur pour rétablir la connexion au serveur distant et/ou d'un message guidant l'utilisateur pour configurer la connexion entre ledit dispositif de restitution de séquences vidéo et ledit écran, en particulier dans le cas d'un écran haute définition, le(s)dit(s) message(s) étant rédigé(s) dans la langue du territoire sélectionné par l'utilisateur (206);
∘ si le territoire courant est un territoire déjà sélectionné par l'utilisateur ou si le territoire courant est un territoire déjà configuré par le serveur lors d'une précédente connexion réussie (203):
▪ affichage sur ledit écran d'un message guidant l'utilisateur pour rétablir la connexion au serveur distant et/ou d'un message guidant l'utilisateur pour configurer la connexion entre ledit dispositif de restitution de séquences vidéo et ledit écran, en particulier dans le cas d'un écran haute définition, le(s)dit(s) message(s) étant rédigé(s) dans la langue du territoire déjà sélectionné par l'utilisateur ou dans la langue du territoire déjà configuré par le serveur (206);
- en cas de succès de la connexion au serveur distant (201):
∘ détection par le serveur du territoire effectif dans lequel est localisé ledit dispositif de restitution de séquences vidéo (207);
∘ si le territoire courant est le territoire par défaut, remplacement du territoire par défaut par le territoire effectif (208-209);
∘ si le territoire courant est un territoire sélectionné par l'utilisateur en mode de configuration locale (208):
▪ comparaison du territoire sélectionné par l'utilisateur avec le territoire effectif (210);
▪ remplacement ou non du territoire sélectionné par le territoire effectif en fonction de règles de fonctionnement propres au serveur (211).

10. Procédé selon la revendication 9 **caractérisé en ce que** ladite étape d'affichage d'un choix de territoires sur ledit écran est réalisée via l'affichage d'une pluralité de drapeaux, chacun des drapeaux étant associé à un territoire donné.

11. Produit programme d'ordinateur comprenant des instructions pour mettre en oeuvre un procédé selon l'une des revendications 9 et 10, lorsqu'il est exécuté par un ordinateur.

12. Support d'enregistrement lisible par ordinateur, sur lequel est enregistré le produit programme d'ordinateur selon la revendication 11.

## Patentansprüche

1. Wiedergabevorrichtung (101) von Videosequenzen, umfassend:
- einen Datenspeicher (113), in dem ein aktueller Gebietswert (118) und Personalisierungsparameter (117) gespeichert sind, die von dem aktuellen Gebietswert abhängen;
- Verbindungsmittel (116) an einen entfernten Server (108), wobei der genannte entfernte Server (108) bei einer erfolgreichen Verbindung das Detektieren des Gebiets, in dem die genannte Vorrichtung (101) angeordnet ist, und das Übertragen einer Information über das detektierte Gebiet an die genannte Vorrichtung (101) zulässt, damit er den aktuellen Gebietswert (118) durch das detektierte Gebiet ersetzt;
- Personalisierungsmittel (119) der genannten Vorrichtung in Abhängigkeit von den Personalisierungsparametern;
wobei die genannte Vorrichtung (101) **dadurch gekennzeichnet ist, dass** sie darüber hinaus Mittel (120) zum Umschalten in einen lokalen Konfigurationsmodus bei einem Fehlschlagen der Verbindung mit dem entfernten Server (108) umfasst, wobei der lokale Konfigurationsmodus dem Nutzer die Auswahl eines Gebietes seiner Wahl und das Ersetzen des aktuellen Gebietswertes (118) durch den Wert des ausgewählten Gebietes erlaubt.

2. Vorrichtung (101) gemäß Anspruch 1, **dadurch gekennzeichnet, dass** sie Mittel (121) zum Übertragen einer ihn anleitenden Nachricht an den Nutzer umfasst, um die Verbindung mit dem entfernten Server (108) wieder herzustellen, wobei die genannte Nachricht in der Sprache des vom Nutzer ausgewählten genannten Gebiets übermittelt wird.

3. Vorrichtung (101) gemäß einem der voranstehenden Ansprüche, **dadurch gekennzeichnet, dass** sie Mittel (122) zum Ersetzen des genannten ausgewählten Gebiets seitens des Nutzers durch das vom Server (108) bei einem Fehlschlagen der Verbindung detektierte Gebiet.

4. Vorrichtung (101) gemäß dem voranstehenden Anspruch, **dadurch gekennzeichnet, dass** die genannten Mittel (122) zum Ersetzen des genannten ausgewählten Gebiets durch den entfernten Server (108) gesteuert sind, der über eine Vielzahl von Kriterien zum Realisieren oder Nicht-Realisieren des Ersetzens verfügt sind.

5. Vorrichtung (101) gemäß einem der voranstehenden Ansprüche, **dadurch gekennzeichnet, dass** die genannten Mittel (120) zum Umschalten in einen lokalen Konfigurationsmodus nach einer vorbestimmten Fehlschlagszeit der Verbindung mit dem Server und / oder einer vorbestimmten Anzahl von fehlgeschlagenen Verbindungsversuchen umschalten.

6. Vorrichtung (101) gemäß einem der voranstehenden Ansprüche, **dadurch gekennzeichnet, dass** die Verbindungsmittel (116) mit einem entfernen Server (108) derart sind, dass sie weiterhin versuchen, eine Verbindung mit dem entfernten Server (108) herzustellen, wenn die genannte Vorrichtung (101) im lokalen Konfigurationsmodus ist.

7. Vorrichtung (101) gemäß einem der voranstehenden Ansprüche, **dadurch gekennzeichnet, dass** die genannte Vorrichtung ein Fernseh-Decoder ist.

8. Vorrichtung (101) gemäß einem der voranstehenden Ansprüche, **dadurch gekennzeichnet, dass** die Personalisierungsmittel (119) und die Mittel (120) zum Umschalten in den lokalen Konfigurationsmodus in einem Programmspeicher (112) der genannten Vorrichtung (101) angeordnete Softwaremittel sind.

9. Konfigurationsverfahren einer Wiedergabevorrichtung (101) von Videosequenzen gemäß Anspruch 1, wobei die genannten Videosequenzen auf einem Bildschirm wie z. B. einem Fernsehbildschirm (102), angezeigt sind, wobei das genannte Verfahren **dadurch gekennzeichnet ist, dass** es die folgenden Schritte umfasst:
- bei dem Unter-Spannung-Setzen der genannten Vorrichtung (200) Verbindungsversuch mit dem entfernten Server (201);
- beim Fehlschlagen der Verbindung mit dem entfernten Server (201):
∘ Umschalten in den lokalen Konfigurationsmodus (202);
∘ wenn das aktuelle Gebiet das voreingestellte Gebiet (203) ist;
▪ Anzeigen einer Auswahl von Gebieten auf dem genannten Bildschirm (204);
▪ Auswählen eines Gebietes durch den Nutzer und Ersetzen des voreingestellten Gebiets durch das ausgewählte Gebiet (205);
▪ Anzeigen einer den Nutzer anleitenden Nachricht auf dem genannten Bildschirm zum Wiederherstellen der Verbindung mit dem entfernten Server und / oder einer den Nutzer anleitenden Nachricht zum Konfigurieren der Verbindung zwischen der genannten Wiedergabevorrichtung von Videosequenzen und dem genannten Bildschirm, insbesondere für den Fall eines Bildschirms mit hoher Auflösung, wobei die genannte(n) Nachrichten) in der Sprache des vom Nutzer (206) ausgewählten Gebiets verfasst ist / sind;
∘ wenn das aktuelle Gebiet ein bereits vom Nutzer ausgewähltes Gebiet ist oder wenn das aktuelle Gebiet ein bereits vom Server bei einer vorherigen erfolgreichen Verbindung (203) konfiguriertes Gebiet ist:
▪ Anzeigen einer den Nutzer anleitenden Nachricht auf dem genannten Bildschirm zum Wiederherstellen der Verbindung mit dem entfernten Server und / oder einer den Nutzer anleitenden Nachricht zum Konfigurieren der Verbindung zwischen der genannten Wiedergabevorrichtung von Videosequenzen und dem genannten Bildschirm, insbesondere in dem Fall eines Bildschirms mit hoher Auflösung, wobei die genannte(n) Nachrichten) in der Sprache des vom Nutzer (206) bereits ausgewählten Gebiets und / oder der bereits vom Server (206) konfigurierten Sprache verfasst ist / sind
- bei einem Erfolg der Verbindung mit dem entfernten Server (201);
∘ Detektieren des effektiven Gebiets, in dem die genannte Wiedergabevorrichtung von Videosequenzen (207) angeordnet ist, durch den Server;
∘ wenn das aktuelle Gebiet das voreingestellte Gebiet ist, Ersetzen des voreingestellten Gebiets durch das effektive Gebiet (208 - 209);
∘ wenn das aktuelle Gebiet ein vom Nutzer im lokalen Konfigurationsmodus (208) ausgewähltes Gebiet ist:
▪ Vergleichen des vom Nutzer ausgewählten Gebiets mit dem effektiven Gebiet (210);
▪ Ersetzen oder Nicht-Ersetzen des ausgewählten Gebiets durch das effektive Gebiet in Abhängigkeit von dem Server (211) eigenen Betriebsregeln.

10. Verfahren gemäß Anspruch 9, **dadurch gekennzeichnet, dass** der genannte Anzeigeschritt einer Wahl von Gebieten auf dem genannten Bildschirm über die Anzeige einer Vielzahl von Flaggen realisiert ist, wobei jede der Flaggen einem bestimmten Gebiet zugeordnet ist.

11. Computerprogrammprodukt, umfassend Anweisungen zum Umsetzen eines Verfahrens gemäß einem der Ansprüche 9 und 10, wenn es durch einen Computer ausgeführt ist.

12. Per Computer lesbarer Speicherträger, auf dem das Computerprogrammprodukt gemäß Anspruch 11 gespeichert ist.

## Claims

1. Device (101) for restoring video sequences comprising:
- a data memory (113) in which are recorded a current territory value (118) and customisation parameters (117) depending on the current territory value;
- means (116) for connecting to a remote server (108), said remote server (108) making it possible, in case of a successful connection, to detect the territory wherein said device (101) is located and to transmit to said device (101) a piece of information on the detected territory so that it replaces the current territory value (118) with the value of the detected territory;
- means (119) for customising said device according to the customisation parameters;
said device (101) being **characterised in that** it further comprises means (120) for switching over to a local configuration mode in case of failure of the connection to the remote server (108), said local configuration mode allowing the user to select a territory of his choice and to replace the current territory value (118) with the value of the selected territory.

2. Device (101) according to claim 1 **characterised in that** it comprises means (121) for transmitting a message to the user guiding him to re-establish the connection to the remote server (108), said message being transmitted in the language of said territory selected by the user.

3. Device (101) according to one of the preceding claims **characterised in that** it comprises means (122) for replacing said territory selected by the user with the territory detected by the server (108) in case of a successful connection.

4. Device (101) according to the preceding claim **characterised in that** said means (122) for replacing said selected territory are controlled by the remote server (108) which has a plurality of criteria to carry out the replacing or not.

5. Device (101) according to one of the preceding claims **characterised in that** said means (120) for switching over to a local configuration mode switch after a predetermined time of failure of the connection to the server and/or a predetermined number of aborted connection attempts.

6. Device (101) according to one of the preceding claims **characterised in that** the means (116) for connecting to a remote server (108) are such that they continue to try to establish a connection to the remote server (108) when said device (101) is in local configuration mode.

7. Device (101) according to one of the preceding claims **characterised in that** said device is a television decoder.

8. Device (101) according to one of the preceding claims **characterised in that** the means (119) for customising and the means (120) for switching on the local configuration mode are software means located in a program memory (112) of said device (101).

9. Method for configuring a device (101) for restoring video sequences according to claim 1, said video sequences being displayed on a screen such as a television screen (102), said method being **characterised in that** it comprises the following steps:
- when said device (200) is turned on, connection attempt to the remote server (201);
- in case of failure of the connection to the remote server (201):
∘ switching to local configuration mode (202);
∘ if the current territory is the default territory (203):
• displaying of a choice of territories on said screen (204);
• selecting of a territory by the user and replacing the default territory with the selected territory (205);
• displaying on said screen of a message guiding the user in order to re-establish the connection to the remote server and/or a message guiding the user to configure the connection between said device for restoring video sequences and said screen, in particular in the case of a high-definition screen, said message(s) being written in the language of the territory selected by the user (206);
∘ if the current territory is a territory already selected by the user or if the current territory is a territory already configured by the server during a previous successful connection (203):
• displaying on said screen of a message guiding the user to re-establish the connection with the remote server and/or of a message guiding the user to configure the connection between said device for restoring video sequences and said screen, in particular in the case of a high-definition screen, said message(s) being written in the language of the territory already selected by the user or in the language of the territory already configured by the server (206);
- in case of a successful connection to the remote server (201):
∘ detecting by the server of the effective territory wherein said device for restoring video sequences (207) is located;
∘ if the current territory is the default territory, replacing the default territory with the effective territory (208-209);
∘ if the current territory is a territory selected by the user in local configuration mode (208):
• comparing the territory selected by the user with the effective territory (210);
• replacing or not of the selected territory with the effective territory according to the operating rules proper to the server (211).

10. Method according to claim 9 **characterised in that** said step of displaying a choice of territories on said screen is carried out via the displaying of a plurality of flags, each one of the flags being associated with a given territory.

11. Computer program product comprising instructions for implementing a method according to one of claims 9 and 10, when it is executed by a computer.

12. Computer-readable storage medium, whereon is recorded the computer program product according to claim 11.
